(19) **Europäisches Patentamt**
**European Patent Office**
**Office européen des brevets**

(11) **EP 3 786 588 A1**

(12) **EUROPEAN PATENT APPLICATION**
published in accordance with Art. 153(4) EPC

(43) Date of publication:
**03.03.2021 Bulletin 2021/09**

(21) Application number: **19791932.7**

(22) Date of filing: **05.03.2019**

(51) Int Cl.:
***G01C 25/00*** *(2006.01)*

(86) International application number:
**PCT/CN2019/077000**

(87) International publication number:
**WO 2019/205813 (31.10.2019 Gazette 2019/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.04.2018 CN 201810386307**

(71) Applicant: **Guangzhou Coayu Robot Co., Ltd.
Guangzhou, Guangdong 510000 (CN)**

(72) Inventors:
• **WANG, Xingzhi
Shenzhen, Guangdong 518000 (CN)**

• **DING, Huang
Shenzhen, Guangdong 518000 (CN)**
• **WANG, Lilei
Shenzhen, Guangdong 518000 (CN)**
• **YANG, Kai
Shenzhen, Guangdong 518000 (CN)**
• **ZHENG, Zhuobin
Shenzhen, Guangdong 518000 (CN)**

(74) Representative: **Müller-Boré & Partner
Patentanwälte PartG mbB
Friedenheimer Brücke 21
80639 München (DE)**

(54) **METHOD FOR CORRECTING GYROSCOPE DATA OF MOBILE ROBOT, DEVICE, AND STORAGE MEDIUM**

(57) The present invention provides a mobile robot gyroscope data correction method, device, and apparatus. The method includes: performing loop closure detection of laser radar data of a current frame; if the loop closure detection is successful, using an iterative closest point ICP algorithm to determine information of Y candidate estimated poses of the current frame according to initial estimated positions of Y key frames of the mobile robot, laser radar point sets of the Y key frames, initial estimated angles of the Y key frames, and a laser radar point set of the current frame of the mobile robot; determining a quantized value of each candidate estimated pose of the current frame according to the laser radar point set of each key frame and the laser radar point set of the current frame; correcting the gyroscope data of the mobile robot according to the candidate estimated pose information corresponding to the maximum quantized value among the Y quantized values. This method can correct the gyroscope data more quickly and accurately and improve the robustness of the system.

performing loop closure detection of laser radar data of a current frame — S101

if the loop closure detection is successful, using an iterative closest point (ICP) algorithm to determine information of Y candidate estimated poses of the current frame according to initial estimated positions of Y key frames of the mobile robot, laser radar point sets of the Y key frames, initial estimated angles of the Y key frames, and a laser radar point set of the current frame of the mobile robot — S102

determining a quantized value of each candidate estimated pose of the current frame according to the laser radar point set of each key frame and the laser radar point set of the current frame — S103

correcting the gyroscope data of the mobile robot according to the candidate estimated pose information corresponding to the maximum quantized value among the Y quantized values — S104

FIG. 2

## Description

## Technical Field

The present invention relates to the field of communication, in particular to a mobile robot gyroscope data correction method, device, and apparatus.

## Background Art

With the continuous development of intelligent products, people's demand for intelligent home products has greatly increased. Smart cleaning robots have gradually entered our life. With certain artificial intelligence, it can automatically complete the ground cleaning work in the room, greatly facilitating people's lives.

In traditional technology, after loop closure detection, the mobile robot performs global optimization operation on all the key frame data recorded by the mobile robot's radar sensor, so as to obtain the optimized mobile robot's pose information in the current frame, and then correct the gyroscope data of the mobile robot according to the pose information in the current frame, so as to eliminate the interference of accumulated error on data correction of the gyroscope.

However, the global optimization operation in the existing technology has a large amount of calculation and a long calculation time, which leads to the poor real-time performance of mobile robot gyroscope data correction.

## Summary of Invention

Based on this, it is necessary to provide a method, device, and apparatus for mobile robot gyroscope data correction, aiming at the problem of a large amount of calculation and long calculation time in traditional technology of global optimization operation, which leads to poor real-time performance of mobile robot gyroscope data correction.

In a first aspect, an embodiment of the present invention provides a mobile robot gyroscope data correction method, including:

performing loop closure detection of laser radar data of a current frame;
if the loop closure detection is successful, using an iterative closest point ICP algorithm to determine information of Y candidate estimated poses of the current frame according to initial estimated positions of Y key frames of the mobile robot, laser radar point sets of the Y key frames, initial estimated angles of the Y key frames, and a laser radar point set of the current frame of the mobile robot;
determining a quantized value of each candidate estimated pose of the current frame according to the laser radar point set of each key frame and the laser radar point set of the current frame; and
correcting the gyroscope data of the mobile robot according to the candidate estimated pose information corresponding to the maximum quantized value among the Y quantized values.

In a second aspect, an embodiment of the present invention provides a mobile robot gyroscope data correction device, including:

a loop closure detection module, being used to perform loop closure detection of laser radar data in a current frame;
a first determination module, being used to, if the loop closure detection is successful, use an iterative closest point ICP algorithm to determine information of Y candidate estimated poses of the current frame according to initial estimated positions of Y key frames of the mobile robot, laser radar point sets of the Y key frames, initial estimated angles of the Y key frames, and a laser radar point set of the current frame of the mobile robot;
a second determination module, being used to determine a quantized value of each candidate estimated pose of the current frame according to the laser radar point set of each key frame and the laser radar point set of the current frame; and
a correction module, being used to correct the gyroscope data of the mobile robot according to the candidate estimated pose information corresponding to the maximum quantized value among the Y quantized values.

In a third aspect, an embodiment of the present invention provides an apparatus, including a memory and a processor, the memory storing a computer program that can be run on the processor, and the processor, when executing the computer program, realizing steps of a method of any of the above embodiments.

In a fourth aspect, an embodiment of the present invention provides a computer-readable storage medium, where a computer program is stored; the computer program is configured to realize steps of a method of any of the above embodiments when the computer program is executed by the processor.

The gyroscope data correction method, device, and apparatus of the mobile robot provided by the present embodiment can enable the mobile robot to adopt ICP algorithm to determine information of Y candidate estimated poses of the current frame according to initial estimated positions of Y key frames, laser radar point sets of the Y key frames, initial estimation angles of the Y key frames, and the laser radar point set of the current frame of the mobile robot, determine a quantized value of each candidate estimated pose of the current frame according to the laser radar point set of each key frame and the laser radar point set of the current frame, and correct the gyroscope data of the mobile robot using the determined candidate estimated pose information corresponding to the maximum quantized value among the Y quantized values. Compared with the global optimization algorithm, the implementation of the ICP algorithm has the characteristics of simple steps and low algorithm complexity. Therefore, using the ICP algorithm to determine the Y estimated poses of the current frame can reduce the amount of calculation and shorten the calculation time, thus improving the real-time performance of gyroscope data correction. At the same time, correcting the gyroscope data of the mobile robot according to the estimated pose information corresponding to the maximum quantized value of Y quantized values is equivalent to selecting the best candidate estimated pose to correct the gyroscope data, which greatly improves the accuracy of the gyroscope data correction, thus, realizing quicker and more accurate gyroscope data correction, and improving the robustness of the system.

**Description of Drawings**

FIG. 1 is a system architecture diagram of an application of a mobile robot gyroscope data correction method provided by an embodiment of the present invention;
FIG. 2 is a flow diagram of a mobile robot gyroscope data correction method provided by an embodiment;
FIG. 3 is a flow diagram of a mobile robot gyroscope data correction method provided by an embodiment;
FIG. 4 is a flow diagram of a mobile robot gyroscope data correction method provided by an embodiment;
FIG. 5 is a flow diagram of a mobile robot gyroscope data correction method provided by an embodiment;
FIG. 6 is a flow diagram of a mobile robot gyroscope data correction method provided by an embodiment;
FIG. 7 is a flow diagram of a mobile robot gyroscope data correction method provided by an embodiment;
FIG. 8 is a flow diagram of a mobile robot gyroscope data correction method provided by an embodiment;
FIG. 9 is a flow diagram of a mobile robot gyroscope data correction method provided by an embodiment;
FIG. 10 is a structural diagram of a mobile robot gyroscope data correction device provided by an embodiment;
FIG. 11 is a structural diagram of a mobile robot gyroscope data correction device provided by an embodiment;
FIG. 12 is a structural diagram of a mobile robot gyroscope data correction device provided by an embodiment;
FIG. 13 is a structural diagram of a mobile robot gyroscope data correction device provided by an embodiment; and
FIG. 14 is a structural diagram of an apparatus provided by an embodiment.

**Specific Embodiment**

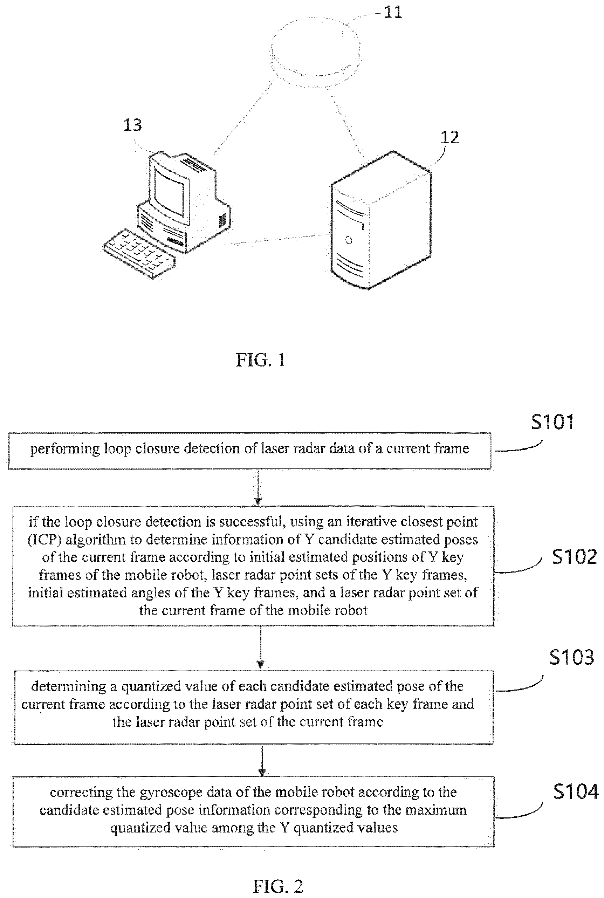

The mobile robot gyroscope data correction method provided by an embodiment of the present invention can be applied to a system shown in FIG. 1. As shown in FIG. 1, the system may include a robot 11, a server 12, and a terminal 13. Optionally, the robot 11 can be a cleaning robot or a mobile robot; Optionally, the server 12 can be a cloud server or a remote server; Optionally, the terminal 13 can be a mobile phone, a tablet computer, or a PDA (Personal Digital Assistant) and other intelligent terminals with any Internet access function. The present invention does not limit the specific types of terminals and servers.

In a traditional mobile robot, all the key frame data recorded by radar sensors are optimized globally to obtain the optimized pose of the mobile robot in the current frame. According to the pose in the current frame, the gyroscope data of the mobile robot is corrected. However, the global optimization operation in the data correction method has a large amount of calculation, and the calculation time is long. As a result, the real-time performance of gyroscope data correction by the mobile robot is poor. Therefore, the data correction method provided by the present invention aims to solve the technical problems existing in the above-mentioned traditional technology.

The mobile robot gyroscope data correction method provided by the embodiment of the present invention can not only realize fast estimation of the estimated pose of the current frame of the mobile robot, but also complete the faster correction of the gyroscope data, and improve the robustness and positioning accuracy of the mobile robot system. Therefore, the mobile robot provided by the embodiment of the present invention can not only be applied to trades such as industry, agriculture, medical treatment, and service, but also be well applied in harmful and dangerous situations such as urban security, national defense, and space exploration.

It should be noted that the execution subject of the following method embodiment can be any one of a mobile robot, a terminal, and a server. The execution subject of the following method embodiment is illustrated with a robot as an example.

In order to make the purpose, technical solution and advantages of the present invention clearer, the technical solution in the embodiment of the present invention is further described in detail through the following embodiments and in combination with the attached drawings. It should be understood that the specific embodiments described herein are for the purpose of explaining the present invention only and are not intended to limit the present invention.

FIG. 2 is a flow diagram of a mobile robot gyroscope data correction method provided by an embodiment. This embodiment involves the specific process of a mobile robot adopting an iterative closest point algorithm to determine information of Y candidate estimated poses of a current frame according to initial estimated positions of Y key frames, laser radar point sets of the Y key frames, initial estimated angles of the Y key frames, and a laser radar point set of the current frame, determining a quantized value of each candidate estimated pose of the current frame, and correcting the gyroscope data of the mobile robot according to the candidate estimated pose information corresponding to the maximum quantized value. As shown in FIG. 2, the method includes:
S101, performing loop closure detection of laser radar data of a current frame.

Specifically, when the laser radar sensor obtains the laser radar data of the current frame, it detects whether there is laser radar data of the key frame matching with the laser radar data of the current frame.

S102, if the loop closure detection is successful, using an iterative closest point (ICP) algorithm to determine information of Y candidate estimated poses of the current frame according to initial estimated positions of Y key frames of the mobile robot, laser radar point sets of the Y key frames, initial estimated angles of the Y key frames, and a laser radar point set of the current frame of the mobile robot.

Specifically, the mobile robot obtains the laser radar point set of the current frame through laser radar sensors, and obtains X key frames matching with the laser radar point set of the current frame after the loop closure detection is successful, and randomly selects Y key frames from the X key frames. Since the laser radar point sets of these key frames are very similar to the laser radar point set of the current frame, information of Y candidate estimated poses of the current frame is determined according to the laser radar data information in the Y key frames.

Wherein, the initial position of the key frame is the initial position of the mobile robot determined by the data obtained by a laser radar sensor at the key frame time, the laser radar point set of the key frame is the set consisting of data points obtained by the laser radar sensor in the key frame, the initial estimated angle of the key frame is the angle information of the mobile robot determined by the data obtained by the laser radar sensor at the key frame time, the laser radar point set of the current frame of the mobile robot includes the set consisting of data points obtained by the laser radar sensor in the current frame, wherein, the duration of each frame of the laser radar sensor is the duration of one revolution of the laser radar sensor.

It should be noted that the mobile robot adopts the ICP algorithm to determine information of the Y candidate estimated poses of the current frame according to the initial estimated positions of the Y key frames, the laser radar point sets of the Y key frames, the initial estimated angles of the Y key frames, and the laser radar point set of the current frame of the mobile robot, but there are no restrictions on the implementation mode and process of the ICP algorithm.

Optionally, the laser radar point set can be a collection of laser radar data or a collection of visual image points.

S103, determining a quantized value of each candidate estimated pose of the current frame according to the laser radar point set of each key frame and the laser radar point set of the current frame.

Specifically, after the mobile robot has determined the information of Y candidate estimated poses of the current frame, it can determine the quantized value of each candidate estimated pose in the current frame according to the laser radar point set of each key frame and the laser radar point set of the current frame, and traverse the Y candidate estimated poses of the current frame to determine the corresponding quantized values of the Y candidate estimated poses.

For example, the quantized value of each candidate estimated pose can be determined according to a relative position between the data points in the laser radar point set of the key frame and the data points in the laser radar point set of the current frame. The closer the relative position is, the larger the quantized value is, and the farther the relative position is, the smaller the quantized value is.

S104, correcting the gyroscope data of the mobile robot according to the candidate estimated pose information corresponding to the maximum quantized value among the Y quantized values.

Specifically, Y quantized values can be sorted from large to small, and the first quantized value can be determined as the maximum quantized value; or, a bubble sorting method can be used to sort the Y quantized values to determine the maximum quantized value, and the gyroscope data of the mobile robot can be corrected according to the estimated pose information corresponding to the maximum quantized value.

According to the data correction method provided in this embodiment, the mobile robot performs loop closure detection on the laser radar data of the current frame. After the loop closure detection is successful, the ICP algorithm is used to determine the Y candidate estimated poses of the current frame according to the initial estimated positions of the Y key frames, the laser radar point set of the Y key frames, the initial estimated angles of the Y key frames, and the laser radar point set of the current frame of the mobile robot. According to the laser radar point set of each key frame and the laser radar point set of the current frame, the quantized value of each candidate estimated pose in the current frame is determined. The gyroscope data of the mobile robot is corrected according to the maximum quantized value of the determined Y quantized values. Compared with the global optimization algorithm, the implementation of the ICP algorithm has the characteristics of simple steps and low algorithm complexity. Therefore, using the ICP algorithm to determine the Y candidate estimated poses of the current frame can reduce the amount of calculation and shorten the calculation time, thus improving the real-time performance of gyroscope data correction. At the same time, correcting the gyroscope data of mobile robot according to the candidate estimated pose information corresponding to the maximum quantized value of the Y quantized values is equivalent to selecting the best candidate estimated pose to correct the gyroscope data, which greatly improves the accuracy of the gyroscope data correction, so that the gyroscope data can be corrected more quickly and accurately, and the robustness of the system is improved.

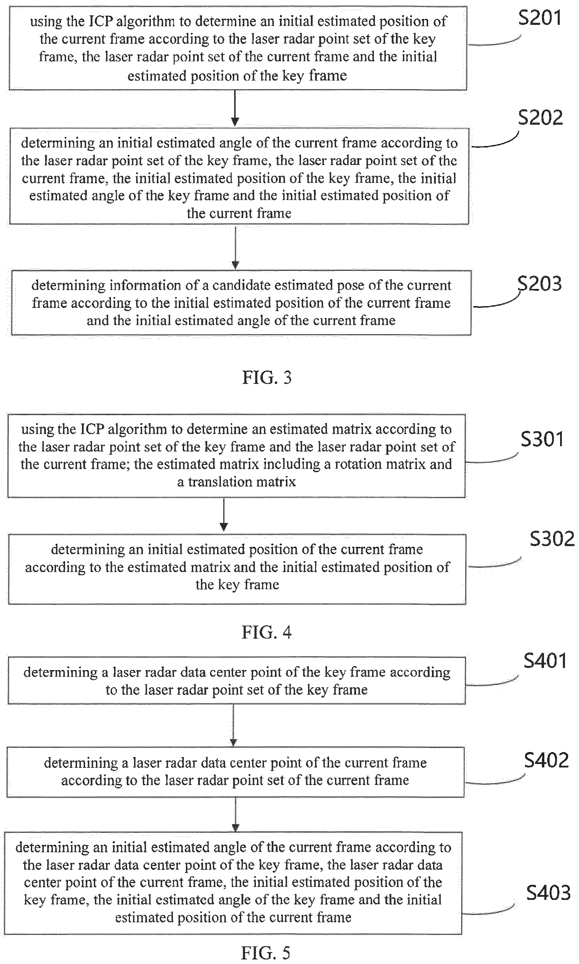

FIG. 3 is a flow diagram of a mobile robot gyroscope data correction method provided by an embodiment. This embodiment involves the specific process of using the ICP algorithm to determine information of Y candidate estimated poses of the current frame. Based on the above embodiment shown in FIG. 2, as shown in FIG. 3, an implementation mode of S102 "if the loop closure detection is successful, using an iterative closest point (ICP) algorithm to determine information of Y candidate estimated poses of the current frame according to initial estimated positions of Y key frames of the mobile robot, laser radar point sets of the Y key frames, initial estimated angles of the Y key frames, and a laser radar point set of the current frame of the mobile robot" may include:

S201, using the ICP algorithm to determine an initial estimated position of the current frame according to the laser radar point set of the key frame, the laser radar point set of the current frame and the initial estimated position of the key frame.

Specifically, the mobile robot obtains the laser radar point set of the current frame through the laser radar sensor and obtains the laser radar point set of the key frame and the initial estimated position of the key frame after the loop closure detection is successful. Then the ICP algorithm is used to determine the initial estimated position of the current frame according to the laser radar point set of the key frame, the laser radar point set of the current frame and the initial estimated position of the key frame.

Optionally, as shown in FIG. 4, a possible implementation mode of S201 "using the ICP algorithm to determine an initial estimated position of the current frame according to the laser radar point set of the key frame, the laser radar point set of the current frame and the initial estimated position of the key frame" may include:

S301, using the ICP algorithm to determine an estimated matrix according to the laser radar point set of the key frame and the laser radar point set of the current frame, the estimated matrix including a rotation matrix and a translation matrix.

Specifically, an estimated matrix is determined using an ICP algorithm according to a laser radar point set of a key frame and a laser radar point set of a current frame; wherein, the estimated matrix includes a rotation matrix and a translation matrix.

Optionally, in this embodiment, the estimated matrix can be obtained by a formula $(R_i, t_i) = ICP(KF_i, F)$, wherein, $KF_i$ represents the laser radar point set of the key frame, F represents the laser radar point set of the current frame, $R_i$ is the rotation matrix and $t_i$ is the translation matrix.

Optionally, the process of determining the rotation matrix $R_i$ and the translation matrix $t_i$ is as follows:

the data center point $p_0$ of the laser radar point set $P$ of the key frame is obtained according to the formula $p_0 = \dfrac{1}{N}\sum_{i=1}^{N} P_i$,

and the data center point $q_0$ of the laser radar point set $q$ of the current frame is obtained according to the formula

$q_0 = \dfrac{1}{N}\sum_{i=1}^{N} q_i$, and the distance $P_i'$ between any point $p_i$ in the laser radar point set $P$ of the key frame and the laser radar data center point of the key frame is determined by the formula $P_i' = p_i - p_0$, the distance $q_i'$

between any point $q_i$ in the laser radar point set $q$ of the current frame and the laser radar data center point of the current frame is determined by the formula $q_i' = q_i - q_0$, and some points are selected from the laser radar point set $P$

of the key frame and the laser radar point set $q$ of the current frame to participate the calculation of $R_i$, for the $i$ pair of point pairs, the corresponding matrix $A_i$ is calculated by the following formula:

$$A_i = \begin{bmatrix} 0 & (p_i' - q_i')^T \\ p_i' - q_i' & (p_i' + q_i')^T \end{bmatrix}.$$

Traversing all $A_i$, the matrix $B$ is calculated by formula $B = \sum_{i=0}^{k} A_i A_i^T$, and the minimum eigenvalue and eigenvector of $B$ are calculated using singular value decomposition. The corresponding rotation matrix $R_i$ is obtained from the minimum eigenvector of $B$, and the translation matrix $t_i$ is determined according to $R_i$ by the formula $t_i = q_0 - R_i p_0$.

S302, determining an initial estimated position of the current frame according to the estimated matrix and the initial estimated position of the key frame.

Specifically, after determining the estimated matrix, the mobile robot determines the initial estimated position $P_{Fi}$ of the current frame according to the estimated matrix and the initial position of the key frame.

Optionally, the initial estimated position $P_{Fi}$ of the current frame can be determined by the formula $P_{Fi} = R_i P_{KFi} + t_i$, where $R_i$ is the rotation matrix, $t_i$ is the translation matrix, and $F_{KFi}$ is the initial estimated position of the key frame.

The mobile robot gyroscope data correction method provided by the above embodiment uses ICP algorithm to determine an estimated matrix according to the laser radar point set of the key frame and the laser radar point set of the current frame, and determine an estimated position of the current frame according to the estimated matrix and an initial estimated position of the key frame. Due to the ICP algorithm, the estimation matrix can be quickly determined according to the laser radar point set of the key frame and the laser radar point set of the current frame. The algorithm has simple steps and fewer parameters, and can quickly and accurately determine the initial estimation position of the current frame.

S202, determining an initial estimated angle of the current frame according to the laser radar point set of the key frame, the laser radar point set of the current frame, the initial estimated position of the key frame, the initial estimated angle of the key frame and the initial estimated position of the current frame.

Specifically, the mobile robot, after determining an initial estimated position of the current frame, then further determines an initial estimated angle of the current frame according to the laser radar point set of the key frame, the laser radar point set of the current frame, the initial estimated position of the key frame, and the initial estimated angle of the key frame.

Optionally, as shown in FIG. 5, a possible implementation mode of S202 "determining an initial estimated angle of the current frame according to the laser radar point set of the key frame, the laser radar point set of the current frame, the initial estimated position of the key frame, the initial estimated angle of the key frame and the initial estimated position of the current frame" may include:

S401, determining a laser radar data center point of the key frame according to the laser radar point set of the key frame.

Specifically, any point in the laser radar point set of the key frame can be selected as the laser radar data center point of the key frame; or, the laser radar data center point $p_0$ of the key frame can be determined according to the formula $p_0 = \dfrac{1}{N} \sum_{i=1}^{N} P_i$; wherein, $p_i$ is any point in the laser radar point set in the key frame; or, the laser radar center point in the key frame can be determined according to the geometric mean method, or the laser radar data center point in the key frame can also be determined according to the harmonic mean method.

S402, determining a laser radar data center point of the current frame according to the laser radar point set of the current frame.

Specifically, any point in the laser radar point set of the current frame can be selected as the laser radar data center point of the key frame; or, the laser radar data center point $q_0$ of the current frame can be determined according to the formula $q_0 = \dfrac{1}{N} \sum_{i=1}^{N} q_i$; wherein, $q_i$ is any point in the laser radar point set in the current frame; or, the laser radar center point in the current frame can be determined according to the geometric mean method, or the laser radar data center point in the current frame can also be determined according to the harmonic mean method.

S403, determining an initial estimated angle of the current frame according to the laser radar data center point of the key frame, the laser radar data center point of the current frame, the initial estimated position of the key frame, the initial estimated angle of the key frame and the initial estimated position of the current frame.

Specifically, the mobile robot determines a laser radar data center point of the key frame according to the laser radar point set of the key frame, and determines a laser radar data center point of the current frame according to the laser radar point set of the current frame, and determines an initial estimated angle of the current frame according to the laser radar data center point of the key frame, the laser radar data center point of the current frame, the initial estimated position of the key frame, the initial estimated angle of the key frame and the initial estimated position of the current frame.

Optionally, the initial estimated angle $\theta_{Fi}$ of the current frame can be determined according to the following formula:

$$\theta_1 = a\tan 2(p_{0i} - p_{KFi})*y, (p_{0i} - p_{KFi})*x),$$

$$\theta_2 = a\tan 2(p_{0F} - p_{Fi})*y, (p_{0F} - p_{Fi})*x),$$

$$\theta_{Fi} = \theta_{KFi} + (\theta_2 - \theta_1),$$

wherein $p_{0i}$ is the laser radar data center point of the key frame, $p_{KFi}$ is the initial estimated position of the key frame, $p_{0F}$ is the laser radar data center point of the current frame, $p_{Fi}$ is the initial estimated position of the current frame, $\theta_{KFi}$ is the initial estimated angle of the key frame, $a$ is a constant, $x$ is the abscissa of the laser radar data point of the current frame, and $y$ is the ordinate of the laser radar data point of the current frame.

In the mobile robot gyroscope data correction method provided by the above embodiment, the mobile robot determines a laser radar data center point of the key frame according to the laser radar point set of the key frame, and determines a laser radar data center point of the current frame according to the laser radar point set of the current frame, and then determines an initial estimated angle of the current frame according to the laser radar data center point of the key frame, the laser radar data center point of the current frame, the initial estimated position of the key frame, and the initial estimated position of the current frame. Since the laser radar data center point of the key frame and the laser radar data center point of the key frame are determined respectively through the laser radar point set of the key frame and the laser radar point set of the current frame, the laser radar data center point is representative and can reflect the overall trend of the laser radar point set of the key frame and the laser radar point set of the current frame, so as to make the determination of the initial estimated angle of the current frame more accurate.

S203, determining information of a candidate estimated pose of the current frame according to the initial estimated position of the current frame and the initial estimated angle of the current frame.

Specifically, the mobile robot, after using the ICP algorithm to determine the initial estimated position of the current frame and the initial estimated angle of the current frame according to the laser radar point set of the key frame, the laser radar point set of the current frame and the initial estimated position of the key frame, determines the information of candidate estimated poses of the current frame. Wherein, the information of candidate estimated poses includes the initial estimated position and the initial estimated angle of the current frame of the mobile robot.

Optionally, the initial estimated angle of the current frame can be determined by the formula $pose_{Fi} = (P_{Fi}, \theta_{Fi})$, wherein $P_{Fi}$ is the initial estimated position of the current frame, $\theta_{Fi}$ is the initial estimated angle of the current frame, $pose_{Fi}$ is the candidate estimated pose of the current frame.

The mobile robot gyroscope data correction method provided by the above embodiment, using the ICP algorithm, determines the initial estimated position of the key frame according to the laser radar point set of the key frame, the laser radar point set of the current frame and the initial estimated position of the key frame, and determines the initial estimated angle of the current frame according to the initial estimated angle of the key frame, the laser radar point set of the key frame, the laser radar point set of the current frame, the initial estimated position of the key frame, and the initial estimated position of the current frame, and determines information of a candidate estimated pose of the current frame according to the initial estimated position of the current frame and the initial estimated angle of the current frame. Due to the ICP algorithm, according to the laser radar point set of the key frame, the laser radar point set of the current frame and the initial estimated position of the key frame, the algorithm has fewer steps and low computational complexity, so it can quickly determine the initial estimated position and angle of the current frame, and then through the determined initial estimated position and angle of the current frame, it improves the speed of determining the estimated pose information of the current frame, which is convenient for correcting the gyroscope data more quickly.

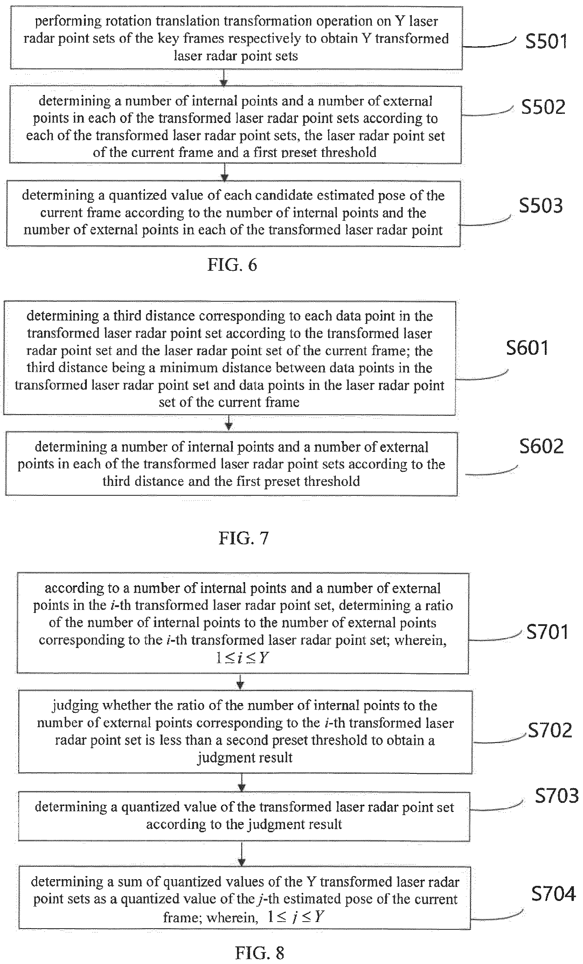

FIG. 6 is a flow diagram of a mobile robot gyroscope data correction method provided by an embodiment. The present embodiment relates to a specific process for a mobile robot to determine a quantized value of each candidate estimated pose of the current frame according to the laser radar point set of the key frame and the laser radar point set of the current frame. Based on the above embodiment, as shown in FIG. 6, the implementation of step 103 may include: S501, performing rotation translation transformation operation on Y laser radar point sets of the key frames to obtain Y transformed laser radar point sets.

Specifically, when performing the rotation translation transformation operation on the laser radar point set of each key frame, the laser radar point set of each key frame can be rotated first and then translated, or the laser radar point set of the key frame can be translated first and then rotated to obtain the transformed laser radar point set of each key frame In the same way, the rotation translation transformation operation is performed on the laser radar point sets of the Y key frames, so that Y transformed laser radar point sets are obtained.

Optionally, the corresponding rotation matrix $R_0$ and translation matrix $t_0$ can be obtained according to the embodiment method in FIG. 4, and the points in the key frame set can be rotated and translated by using the calculated $R_0$ and $t_0$, and the transformed laser radar point set $P'$ can be obtained by the following formula:

$$P' = R_0 P + t_0 \, ,$$

wherein $P$ is the laser radar point set of the key frame, $R_0$ is the rotation matrix and $t_0$ is the translation matrix.

S502, determining a number of internal points and a number of external points in each of the transformed laser radar point sets according to each of the transformed laser radar point sets, the laser radar point set of the current frame and a first preset threshold.

For example, by comparing the distance between the data points in the transformed laser radar point set and the data points in the laser radar point set of the current frame with a first preset threshold, the number of internal points and external points in each transformed laser radar point set can be determined. Wherein, the number of internal points and external points in different transformed laser radar point sets are different.

Optionally, as shown in FIG. 7, a possible implementation mode of S502 "determining a number of internal points and a number of external points in each of the transformed laser radar point sets according to each of the transformed laser radar point sets, the laser radar point set of the current frame and a first preset threshold" may include: S601, determining a third distance corresponding to each data point in the transformed laser radar point set according to the transformed laser radar point set and the laser radar point set of the current frame; the third distance is a minimum distance between data points in the transformed laser radar point set and data points in the laser radar point set of the current frame.

Specifically, the mobile robot, after performing rotation translation transformation operation on the laser radar point set of the key frame to obtain the transformed laser radar point set, determines a minimum distance between each data point in the transformed laser radar point set and each data point in the laser radar point set of the current frame according to the transformed laser radar point set and the laser radar point set of the current frame; Optionally, first, any point in the transformed laser radar point set can be selected, and the nearest data point in the laser radar point set of the current frame can be retrieved, and then the third distance between the point in the transformed laser radar point set and the retrieved data point in the laser radar point set of the current frame can be calculated.

For example, the third distance can be calculated by the following formula:

$$d_i = \sqrt{(x_1 - x_2)^2 + (y_1 - y_2)^2} \, ,$$

wherein $(x_1, y_1)$ are the point coordinates in the transformed laser radar point set, $(x_2, y_2)$ are the point coordinates in the laser radar point set of the current frame, and $d_i$ is the third distance.

S602, determining the number of internal points and the number of external points in each of the transformed laser radar point sets according to the third distance and the first preset threshold.

Specifically, the first preset threshold is the threshold determined according to the actual situation. The mobile robot, after determining the third distance corresponding to each data point in the transformed laser radar point set according to the transformed laser radar point set and the laser radar point set of the current frame, compares the third distance with the first preset threshold, and determines the number of internal points and external points in each transformed laser radar point set according to the comparison result.

Optionally, if the third distance is less than the first preset threshold, the points in the transformed laser radar point set are determined as internal points; if the third distance is greater than three times of the first preset threshold, the points in the transformed laser radar point set are determined as external points; then, according to the internal points and external points in each transformed laser radar point set, the number of internal points and external points in each transformed laser radar point set are determined.

For example, the following formula can be used to determine the internal and external points in the transformed laser point set, traverse all the points in the transformed laser point set, and count the number of internal points $num_1$ and external points $num_2$ in the point set.

$$P_i' \text{ is } \begin{cases} \text{Internal point,} & \text{if } d_i < \varepsilon \\ \text{External point,} & \text{if } d_i > 3\varepsilon \end{cases},$$

wherein $p_i'$ is the transformed laser radar point set, $d_i$ is the third distance, $\varepsilon$ is the first preset threshold.

In the mobile robot gyroscope data correction method provided by the above amendment, the mobile robot, after performing rotation translation transformation operation on the laser radar point set of the key frame, obtains a transformed laser radar point set, and determines a third distance corresponding to each data point in the transformed laser radar point set and the data point in the nearest laser radar point set in the current frame according to the transformed laser radar point set and the laser radar point set of the current frame, and then determines the number of internal points and the number of external points in each transformed laser radar point set according to the size relationship between the third distance and the first preset threshold. Since the third distance is a minimum distance between data points in the transformed laser radar point set and data points in the laser radar point set of the current frame, the data points in the transformed laser radar point set are closer to the data points in the current frame laser radar point set, so as to determine the number of internal points and external points in the transformed laser radar point set more accurately.

S503, determining a quantized value of each candidate estimated pose of the current frame according to the number of internal points and the number of external points in each of the transformed laser radar point sets.

In the present embodiment, after determining the number of internal points and external points in the transformed laser radar point set, the quantized value of each estimated pose in the current frame can be determined according to the ratio of the number of internal points and external points.

Optionally, as shown in FIG. 8, a possible implementation mode of S503 "determining a quantized value of each candidate estimated pose of the current frame according to the number of internal points and the number of external points in each of the transformed laser radar point sets" may include:

S701, according to a number of internal points and a number of external points in the *i*-th transformed laser radar point set, determining a ratio of the number of internal points to the number of external points corresponding to the *i*-th transformed laser radar point set; wherein, $1 \leq i \leq Y$.

Specifically, after the mobile robot determines the number of internal points and external points in each transformed laser radar point set, and quotes the number of internal points and external points in the *i*-th transformed laser radar point set, the corresponding result is obtained, and the result is determined to be the ratio of the number of internal points and external points corresponding to the *i*-th transformed laser radar point set. For example, the ratio of the number of internal points to the number of external points $\dfrac{num_1}{num_2}$ can be determined according to the number of internal points $num_1$ and the number of external points $num_2$ in the *i*-th transformed laser radar point set $p_i'$.

S702, judging whether the ratio of the number of internal points to the number of external points corresponding to the *i*-th transformed laser radar point set is less than a second preset threshold to obtain a judgment result.

Specifically, the mobile robot, after determining the ratio of the number of internal points to the number of external points in the *i*-th transformed laser radar point set, and judging the size relationship between the ratio of the number of internal points and external points in the transformed laser radar point set and the second preset threshold, obtains the corresponding judgment result.

Optionally, the judgment result can be that the ratio of the number of internal points to the number of external points in the transformed laser radar point set is less than the second preset threshold, or the ratio of the number of interior points to the number of external points in the transformed laser radar point set is not less than the second preset threshold, that is, the ratio of the number of interior points to the number of external points in the transformed laser radar point set is greater than or equal to the second preset threshold.

S703, determining a quantized value of the transformed laser radar point set according to the judgment result.

Specifically, the mobile robot obtains a corresponding judgment result by determining whether the ratio of the number of internal points to the number of external points corresponding to the *i*-th transformed laser radar point set is less than the second preset threshold and then determines the quantized value of the transformed laser radar point set according to the judgment result.

Optionally, if the judgment result is that the ratio of the number of internal points to the number of external points corresponding to the *i*-th transformed laser radar point set is less than the second preset threshold, then the ratio of the number of internal points to the number of external points corresponding to the *i*-th transformed laser radar point set is determined as the quantized value of the transformed laser radar point set; if the judgment result is that the ratio of the number of internal points to external points corresponding to the *i*-th transformed laser radar point set is not less than the second preset threshold, then the second preset threshold is determined to be the quantized value of the transformed laser radar point set.

For example, the judgment result can be determined by the following formula,

$$ICPscore(KF_i, F_j, pose_{KFi}, pose_{Fj}) = p\left(\frac{num_1}{num_2}\right) = \begin{cases} \dfrac{num_1}{num_2}, & \dfrac{num_1}{num_2} < K \\ K, & \dfrac{num_1}{num_2} \geq K \end{cases},$$

wherein $\dfrac{num_1}{num_2}$ is the ratio of the number of internal points and the number of external points in the transformed laser radar point set, $K$ is the second preset threshold, $p\left(\dfrac{num_1}{num_2}\right)$ is the quantized value of the transformed laser radar point set, $KF_i$ is the $i$-th transformed laser radar point set, $F_j$ is the laser radar point set of the current frame, $pose_{KFi}$ is the $i$-th candidate estimated pose of the transformed laser radar point set, and $pose_{Fj}$ is the $j$-th candidate estimated pose of the current frame.

S704, determining a sum of quantized values of the Y transformed laser radar point sets as a quantized value of a $j$-th estimated pose of the current frame; wherein, $1 < j \leq Y$.

Specifically, when the mobile robot determines the quantized value of the $j$-th candidate estimated pose of the current frame, it determines the ratio of the number of internal points and the number of external points in the $i$-th transformed laser radar point set, and judges whether the ratio is less than the second preset threshold, and then according to the judgment result, determines the quantized value of the $i$-th transformed laser radar point set, and then traverses the Y transformed laser radar point sets. At this time, the Y quantized values corresponding to the Y transformed laser radar point sets can be determined. The Y quantized values are accumulated and summed to obtain the corresponding result, which is determined as the quantized value of the $j$-th candidate estimated pose of the current frame.

For example, the quantized value of the $j$-th candidate estimated pose of the current frame may be determined by the following formula:

$$score_j = \sum_{i=0}^{Y} ICPscore(KF_i, F_j, pose_{KFi}, pose_{Fj}),$$

wherein $KF_i$ is the $i$-th transformed laser radar point set, $F_j$ is the laser radar point set of the current frame, $pose_{KFi}$ is the candidate estimated pose of the $i$-th transformed laser radar point set, $pose_{Fj}$ is the $j$-th candidate estimated pose of the current frame, $score_j$ is the quantized value of the $j$-th candidate estimated pose of the current frame, $score(KF_i, F_j, pose_{KFi}, pose_{Fj})$ is the quantized value of the $i$-th transformed laser radar point set corresponding to the $j$-th candidate estimated pose of the current frame.

It should be noted that the above process is the overall process of determining the quantized value of the $j$-th candidate estimated pose corresponding to the current frame. For each candidate estimated pose, Y key frames need to be traversed, and the sum of the quantized values of Y transformed laser radar point sets corresponding to the Y key frames is taken as the quantized value of the candidate estimated pose. By traversing each candidate estimated pose of the current frame, the Y quantized values corresponding to the Y estimated poses of the current frame can be determined. By comparing the Y quantized values of the current frame, the maximum quantized value of the current frame is obtained.

Optionally, if the maximum quantized value is greater than a third preset threshold, the gyroscope data of the mobile robot is corrected according to the candidate estimated pose information corresponding to the maximum quantized value.

Specifically, after the maximum quantized value of the current frame is determined, the maximum quantized value is compared with the third preset threshold. When the maximum quantized value is greater than the third preset threshold, the gyroscope data of the mobile robot is corrected according to the candidate estimated pose information corresponding to the maximum quantized value.

In the mobile robot gyroscope data correction method provided by the above embodiment, the mobile robot determines, according to the number of internal points and the number of external points in the $i$-th transformed laser radar point set, the ratio between the number of internal points and the number of external points corresponding to the $i$-th transformed laser radar point set, then judges whether the ratio is less than the second preset threshold to obtain the corresponding judgment result, and determines the quantized value of the $i$-th transformed laser radar point set according to the judgment result. The quantized values of the Y transformed laser radar point sets are obtained by traversing Y transformed laser radar point sets, and the sum of the Y quantized values is determined as the quantized value of the *j*-th candidate estimated pose. Then, the Y candidate estimated poses of the current frame are traversed to obtain the corresponding Y quantized values, and the maximum quantized value is determined therein. The maximum quantized value is compared with the third preset threshold. When the maximum quantized value is greater than the third preset threshold, the gyroscope is corrected according to the estimated pose information corresponding to the maximum quantized value. Since the mobile robot can better determine the relationship between the number of internal points and the number of external points by determining the ratio of the number of internal points to the number of external points in the transformed radar point set, and by comparing the ratio with the second preset threshold, so as to determine the quantized value of the *i*-th transformed laser radar point set more accurately, and add the quantized values of the Y transformed laser radar point sets, which makes the determination of the quantized value of the *j*-th estimated pose more accurate, which is convenient for more accurate correction of gyroscope data.

In the mobile robot gyroscope data correction method provided by the present embodiment, the mobile robot first performs rotation translation transformation operation on the laser radar point sets of Y key frames, obtains Y transformed laser radar point sets, and determines the number of internal points and the number of external points of each transformed laser radar point set according to each transformed laser radar point set, the laser radar point set of the current frame and the first preset threshold. Then, according to the number of internal points and the number of external points in each transformed laser radar point set, the quantized value of each candidate estimated pose in the current frame is determined. According to the number of internal points and the number of external points in the transformed laser radar point set, the quantized value of each candidate estimated pose of the current frame can be accurately determined, which makes the mobile robot more accurate in determining the optimal pose of the current frame, thus greatly improving the accuracy of the gyroscope data correction and greatly improving the robustness of the system.

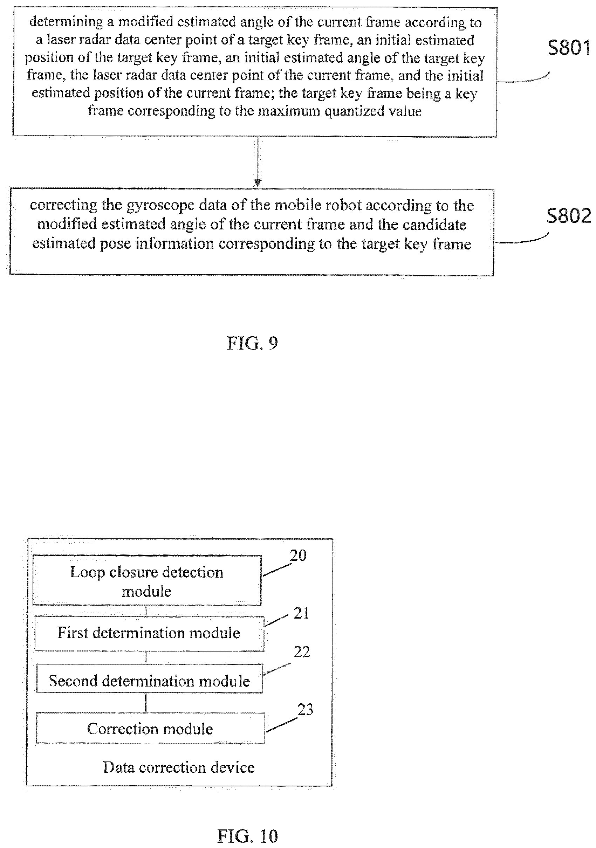

FIG. 9 is a flow diagram of a mobile robot gyroscope data correction method provided by an embodiment. This embodiment relates to the specific process of S104 "the mobile robot correcting the gyroscope data according to the candidate estimated pose information corresponding to the maximum quantized value". On the basis of the above embodiment, as shown in FIG. 9, the method includes:

S801, determining a modified estimated angle of the current frame according to a laser radar data center point of a target key frame, an initial estimated position of the target key frame, an initial estimated angle of the target key frame, the laser radar data center point of the current frame, and the initial estimated position of the current frame; the target key frame being a key frame corresponding to the maximum quantized value.

Specifically, when the mobile robot corrects the gyroscope data according to the candidate estimated pose information in the key frame corresponding to the maximum quantized value, the modified estimated angle of the current frame can be further determined.

Optionally, the modified estimation angle of the current frame can be determined by the following formula,

$$\theta_1 = a\tan 2(p_{0i} - p_{KFK}) * y, (p_{0i} - p_{KFK}) * x),$$

$$\theta_2 = a\tan 2(p_{0F} - p_{FK}) * y, (p_{0F} - p_{FK}) * x),$$

$$\theta_{FK} = \theta_{KFK} + (\theta_2 - \theta_1),$$

wherein $p_{0i}$ is the data center point of the laser radar point set of the key frame, $p_{KFK}$ is the initial estimated position of the key frame corresponding to the maximum quantized value, $p_{0F}$ is the data center point of the laser radar point set of the current frame, $p_{FK}$ is the initial estimated position of the current frame corresponding to the maximum quantized value, $\theta_{FK}$ is the initial estimated angle of the key frame corresponding to the maximum quantized value, $\theta_{KFK}$ is the modified estimated angle of the current frame, *a* is a constant, *x* is the abscissa of the current frame laser radar data point, and *y* is the ordinate of the current frame laser radar data point.

S802, correcting the gyroscope data of the mobile robot according to the modified estimated angle of the current frame and the candidate estimated pose information corresponding to the target key frame.

Specifically, after the mobile robot determines the modified estimated angle of the current frame, and then according to the modified estimated angle of the current frame and the estimated pose information of the key frame corresponding to the maximum quantized value, the mobile robot can further correct the gyroscope data, thus further improving the accuracy of the gyroscope correction.

In the mobile robot gyroscope data correction method provided by the present embodiment, the mobile robot first determines the modified estimated angle of the current frame according to the laser radar data center point of the key frame corresponding to the maximum quantized value, the initial estimated position of the key frame, the initial estimated angle of the key frame, the laser radar data center point of the current frame, and the initial estimated position of the current frame, and according to the modified estimated angle of the current frame and the candidate estimated pose information corresponding to the key frame, the gyroscope data of the mobile robot is corrected. The accuracy of gyroscope data correction is further improved by determining the modified estimated angle of the current frame.

Fig. 10 is a schematic diagram of a mobile robot gyroscope data correction device provided by an embodiment. As shown in FIG. 10, the device includes a loop closure detection module 20, a first determination module 21, a second determination module 22, and a first correction module 23.

The loop closure detection module 20 is used to perform loop closure detection of laser radar data in a current frame.

The first determination module 21 is used to, when the loop closure detection is successful, use an iterative closest point ICP algorithm to determine information of Y candidate estimated poses of the current frame according to initial estimated positions of Y key frames of the mobile robot, laser radar point sets of the Y key frames, initial estimated angles of the Y key frames, and a laser radar point set of the current frame of the mobile robot.

The second determination module 22 is used to determine a quantized value of each candidate estimated pose of the current frame according to the laser radar point set of each key frame and the laser radar point set of the current frame;

The first correction module 23 is used to correct the gyroscope data of the mobile robot according to the candidate estimated pose information corresponding to the maximum quantized value among the Y quantized values.

The mobile robot gyroscope data correction device provided by the present embodiment can implement the method embodiment shown in FIG. 2, and its implementation principle and technical effect are similar, so it will not be repeated here.

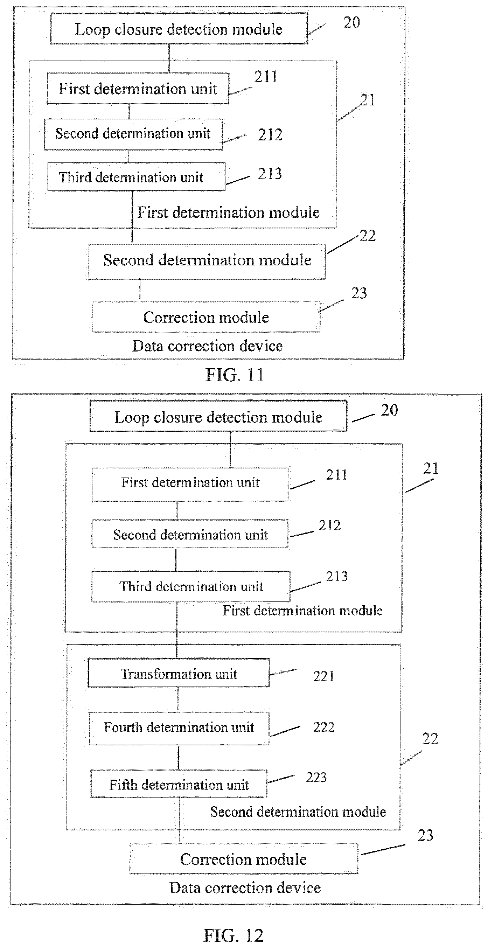

FIG. 11 is a schematic diagram of a mobile robot gyroscope data correction device provided by another embodiment. As shown in FIG. 11, on the basis of the embodiment shown in FIG. 10, the first determination module 21 includes a first determination unit 211, a second determination unit 212, and a third determination unit 213.

Specifically, the first determination unit 211 is used to determine the initial estimated position of the current frame according to the laser radar point set of the key frame, the laser radar point set of the current frame and the initial estimated position of the key frame using the ICP algorithm.

The second determination unit 212 is used for determining the initial estimated angle of the current frame according to the laser radar point set of the key frame, the laser radar point set of the current frame, the initial estimated position of the key frame, the initial estimated angle of the key frame and the initial estimated position of the current frame.

The third determination unit 213 is used for determining the candidate estimated pose information of the current frame according to the initial estimated position of the current frame and the initial estimated angle of the current frame.

The mobile robot gyroscope data correction device provided by the present embodiment can implement the method embodiment shown in FIG. 3, and its implementation principle and technical effect are similar, so it will not be repeated here.

In one of the embodiments, optionally, the first determination unit 211 is specifically used to determine the estimated matrix according to the laser radar point set of the key frame and the laser radar point set of the current frame by using the ICP algorithm; the estimated matrix includes a rotation matrix and a translation matrix; the initial estimated position of the current frame is determined according to the estimated matrix and the initial estimated position of the key frame.

In one of the embodiments, optionally, the second determination unit 212 is specifically used to determine the laser radar data center point of the key frame according to the laser radar point set of the key frame; determine the laser radar data center point of the current frame according to the laser radar point set of the current frame; determine the initial estimated angle of the current frame according to the laser radar data center point of the key frame, the laser radar data center point of the current frame, the initial estimated position of the key frame, the initial estimated angle of the key frame and the initial estimated position of the current frame.

In one embodiment, optionally, the second determination unit 212 is specifically used to determine the laser radar data center point $p_0$ in the key frame according to the formula $p_0 = \frac{1}{N}\sum_{i=1}^{N} P_i$ ; wherein $p_i$ is any point in the laser radar point set in the key frame; determine the laser radar data center point $q_0$ in the current frame according to the formula $q_0 = \frac{1}{N}\sum_{i=1}^{N} q_i$ ; wherein, $q_i$ is any point in the laser radar point set in the current frame.

FIG. 12 is a schematic diagram of a mobile robot gyroscope data correction device provided by another embodiment. As shown in FIG. 12, on the basis of the embodiment shown in FIG. 11, the second determination module 22 includes: a transformation unit 221, a fourth determination unit 222, and a fifth determination unit 223.

Specifically, the transformation unit 221 is used to perform rotation translation transformation on Y laser radar point sets of the key frames, and obtain Y transformed laser radar point sets.

The fourth determination unit 222 is used to determine the number of internal points and the number of external points in each of the transformed laser radar point sets according to each of the transformed laser radar point sets, the laser radar point set of the current frame, and the first preset threshold.

The fifth determination unit 223 is used to determine the quantized value of each candidate estimated pose of the current frame according to the number of internal points and the number of external points in each of the transformed laser radar point sets.

The mobile robot gyroscope data correction device provided by the present embodiment can implement the method embodiment shown in FIG. 6, and its implementation principle and technical effect are similar, so it will not be repeated here.

In one of the embodiments, optionally, the fourth determination unit 222 is specifically used to determine the third distance corresponding to each data point in the transformed laser radar point set according to the transformed laser radar point set and the laser radar point set of the current frame; the third distance is the minimum distance between data points in the transformed laser radar point set and data points in the laser radar point set of the current frame; determine the number of internal points and the number of external points in each of the transformed laser radar point sets according to the third distance and the first preset threshold.

In one of the embodiments, optionally, the fourth determination unit 222 is specifically used to determine, if the third distance is less than the first preset threshold, determine that points in the transformed laser radar point set to be internal points; if the third distance is greater than three times of the first preset threshold, determine that points in the transformed laser radar point set to be external points; determine the number of internal points and the number of external points in each of the transformed laser radar point sets according to the internal points and external points in each of the transformed laser radar point sets.

The mobile robot gyroscope data correction device provided by the present embodiment can implement the method embodiment shown in FIG. 7, and its implementation principle and technical effect are similar, so it will not be repeated here.

In one of the embodiments, optionally, the fifth determination unit 223 is specifically used to determine, according to the number of internal points and the number of external points in the $i$-th transformed laser radar point set, the ratio of the number of internal points to the number of external points corresponding to the $i$-th transformed laser radar point set; wherein, $1 \leq i \leq Y$; judge whether the ratio of the number of internal points to the number of external points corresponding to the $i$-th transformed laser radar point set is less than the second preset threshold to obtain the judgment result; determine a quantized value of the transformed laser radar point set according to the judgment result; determine the sum of quantized values of the Y transformed laser radar point sets as the quantized value of the $j$-th estimated pose of the current frame; wherein, $1 \leq j \leq Y$.

In one of the embodiments, optionally, the fifth determination unit 223 is specifically used to determine, if the judgment result is that the ratio of the number of internal points to the number of external points corresponding to the $i$-th transformed laser radar point set is less than the second preset threshold, the ratio of the number of internal points to the external points corresponding to the $i$-th transformed laser radar point set as the quantized value of the transformed laser radar point set; if the judgment result is that the ratio of the number of internal points to the number of external points corresponding to the $i$-th transformed laser radar point set is not less than the second preset threshold, determine the second preset threshold as the quantized value of the transformed laser radar point set.

In one of the embodiments, optionally, the correction module 23 is specifically used to, if the maximum quantized value is greater than a third preset threshold, correct the gyroscope data according to the candidate estimated pose information corresponding to the maximum quantized value.

The mobile robot gyroscope data correction device provided by the present embodiment can implement the method embodiment shown in FIG. 8, and its implementation principle and technical effect are similar, so it will not be repeated here.

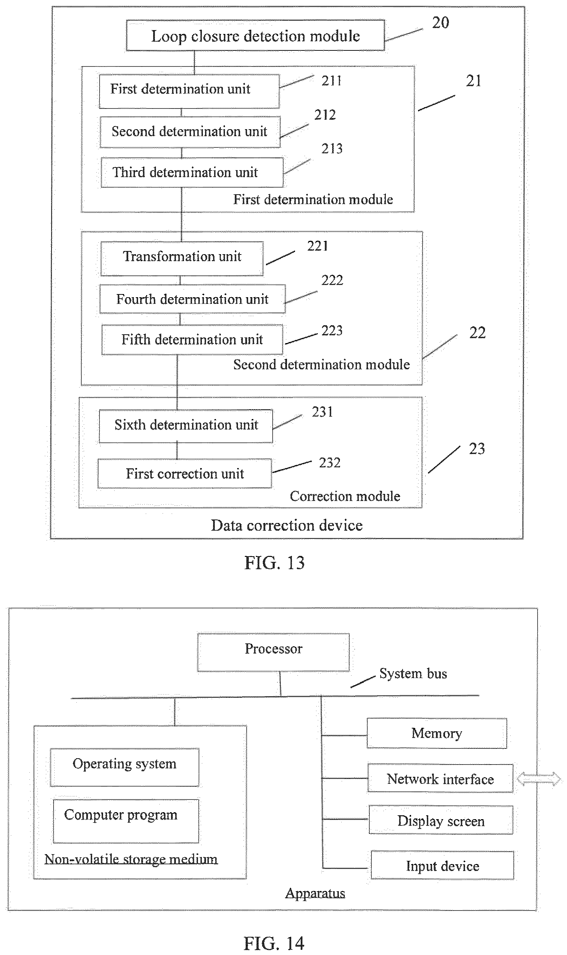

FIG. 13 is a schematic diagram of a mobile robot gyroscope data correction device provided by another embodiment. As shown in FIG. 13, on the basis of the above embodiment, the correction module 23 includes: a sixth determination unit 231, and a first correction unit 232.

Specifically, the sixth determination unit 231 is used to determine the modified estimated angle of the current frame according to the laser radar data center point of the target key frame, the initial estimated position of the target key frame, the initial estimated angle of the target key frame, the laser radar data center point of the current frame, and the initial estimated position of the current frame; the target key frame is the key frame corresponding to the maximum quantized value.

The first correction unit 232 is used to correct the gyroscope data of the mobile robot according to the modified estimated angle of the current frame and the candidate estimated pose information corresponding to the target key frame.

The mobile robot gyroscope data correction device provided by the present embodiment can implement the method embodiment shown in FIG. 9, and its implementation principle and technical effect are similar, so it will not be repeated here.

For the specific limitations of the device for controlling the data correction, please refer to the limitations of the above data correction method in the above text, and will not be repeated here. Each module of the data correction device can be realized wholly or partly by software, hardware, and their combination. The above modules can be embedded in the form of software in or independent of the processor of the robot, or stored in the form of software in the memory of the robot, so as to facilitate the processor to call and perform the corresponding operations of the above modules.

In one embodiment, an apparatus is provided, and its internal structure diagram can be as shown in FIG. 14. The robot may include a processor, a memory, a network interface, a display screen, and an input device connected via a system bus. The processor of the robot is used to provide computing and control capabilities. The memory of the robot includes non-volatile storage medium and memory. The non-volatile storage medium stores the operating system and computer program. The memory provides an environment for an operating system and computer program running in the non-volatile storage medium. The network interface of the robot is used to communicate with external terminals through a network connection. The computer program is executed by the processor to realize a data correction method. The display screen of the robot can be a liquid crystal display or an electronic ink display screen, and the input device of the robot can be a touch layer covered on the display screen, buttons, a trackball or a touch control board set on the shell of the robot, or an external keyboard, touch control board or mouse, etc.

It can be understood by those skilled in the art that the structure shown in FIG. 14 is only a block diagram of a part of the structure related to the application scheme and does not constitute a limitation on the robot applied to the solution of the present application. The specific robot may include more or fewer components than shown in the figure, or combine some components, or have different component arrangements.

In one embodiment, an apparatus is provided, including a memory and a processor, a computer program being stored in the memory, and the processor realizes the following steps when executing the computer program:

performing loop closure detection of laser radar data of a current frame;

if the loop closure detection is successful, using an iterative closest point (ICP) algorithm to determine information of Y candidate estimated poses of the current frame according to initial estimated positions of Y key frames of the mobile robot, laser radar point sets of the Y key frames, initial estimated angles of the Y key frames, and a laser radar point set of the current frame of the mobile robot;

determining a quantized value of each candidate estimated pose of the current frame according to the laser radar point set of each key frame and the laser radar point set of the current frame;

correcting the gyroscope data of the mobile robot according to the candidate estimated pose information corresponding to the maximum quantized value among the Y quantized values.

In one embodiment, a computer-readable storage medium is provided, including a computer program; when the computer program is executed by the processor, the computer program is configured to realize the following steps:

performing loop closure detection of laser radar data of a current frame;

if the loop closure detection is successful, using an iterative closest point (ICP) algorithm to determine information of Y candidate estimated poses of the current frame according to initial estimated positions of Y key frames of the mobile robot, laser radar point sets of the Y key frames, initial estimated angles of the Y key frames, and a laser radar point set of the current frame of the mobile robot;

determining a quantized value of each candidate estimated pose of the current frame according to the laser radar point set of each key frame and the laser radar point set of the current frame;

correcting the gyroscope data of the mobile robot according to the candidate estimated pose information corresponding to the maximum quantized value among the Y quantized values.

A person of ordinary skill in the art can understand that all or part of the flow in implementing the above embodiment methods can be completed by instructing relevant hardware through a computer program. The computer program can be stored in a non-volatile computer readable storage medium, and when executed, the computer program may include the flow of the embodiments of the above methods. Any reference to a memory, a storage, a database, or any other media used in the embodiments provided by the present application may include a non-volatile and/or a volatile memory. A non-volatile memory may include a read-only memory (ROM), a programmable ROM (PROM), an electrically programmable ROM (EPROM), an electrically erasable programmable ROM (EEPROM), or a flash memory. A volatile memory may include a random access memory (RAM) or an external cache memory. As an illustration rather than a limitation, a RAM is available in various forms, such as a static RAM (SRAM), a dynamic RAM (DRAM), a synchronous DRAM (SDRAM), a dual data rate SDRAM (DDRSDRAM), an enhanced SDRAM (ESDRAM), a synchronous link (Synchlink) DRAM (SLDRAM), a Rambus direct RAM (RDRAM), a direct Rambus dynamic RAM (DRDRAM), and a Rambus dynamic RAM (RDRAM), etc.

The technical features of the above embodiments can be arbitrarily combined. In order to make the description concise, not all possible combinations of the above-mentioned technical features are described. However, as long as the combination of these technical features is not contradictory, it should be considered as the scope of the description.

The above-mentioned embodiments only express several embodiments of the present invention, and the description is more specific and detailed, but it can not be understood as a limitation on the patent scope of the present invention. It should be pointed out that for an ordinary technical person in the art, certain deformations and improvements can be made without departing from the concept of the present invention, which belong to the protection scope of the present invention. Therefore, the patent protection scope of the present invention shall be on the basis of the attached claims.

### Claims

1. A mobile robot gyroscope data correction method, **characterized in that**, comprising:

    performing loop closure detection of laser radar data of a current frame;
    if the loop closure detection is successful, using an iterative closest point (ICP) algorithm to determine information of Y candidate estimated poses of the current frame according to initial estimated positions of Y key frames of the mobile robot, laser radar point sets of the Y key frames, initial estimated angles of the Y key frames, and a laser radar point set of the current frame of the mobile robot;
    determining a quantized value of each candidate estimated pose of the current frame according to the laser radar point set of each key frame and the laser radar point set of the current frame; and
    correcting the gyroscope data of the mobile robot according to the candidate estimated pose information corresponding to the maximum quantized value among the Y quantized values.

2. The method according to claim 1, **characterized in that**, using an iterative closest point ICP algorithm to determine information of Y candidate estimated poses of the current frame according to initial estimated positions of Y key frames of the mobile robot, laser rader point sets of the Y key frames, initial estimated angles of the Y key frames, and a laser radar point set of the current frame of the mobile robot, comprising:

    using the ICP algorithm to determine an initial estimated position of the current frame according to the laser radar point set of the key frame, the laser radar point set of the current frame and the initial estimated position of the key frame;
    determining an initial estimated angle of the current frame according to the laser radar point set of the key frame, the laser radar point set of the current frame, the initial estimated position of the key frame, the initial estimated angle of the key frame and the initial estimated position of the current frame; and
    determining information of a candidate estimated pose of the current frame according to the initial estimated position of the current frame and the initial estimated angle of the current frame.

3. The method according to claim 2, **characterized in that**, using the ICP algorithm to determine an initial estimated position of the current frame according to the laser radar point set of the key frame, the laser radar point set of the current frame and the initial estimated position of the key frame, comprising:

    using the ICP algorithm to determine an estimated matrix according to the laser radar point set of the key frame and the laser radar point set of the current frame; the estimated matrix including a rotation matrix and a translation matrix; and
    determining an initial estimated position of the current frame according to the estimated matrix and the initial estimated position of the key frame.

4. The method according to claim 2 or 3, **characterized in that**, determining an initial estimated angle of the current frame according to the laser radar point set of the key frame, the laser radar point set of the current frame, the initial estimated position of the key frame, the initial estimated angle of the key frame and the initial estimated position of the current frame, comprising:

    determining a laser radar data center point of the key frame according to the laser radar point set of the key frame;
    determining a laser radar data center point of the current frame according to the laser radar point set of the current frame; and

determining an initial estimated angle of the current frame according to the laser radar data center point of the key frame, the laser radar data center point of the current frame, the initial estimated position of the key frame, the initial estimated angle of the key frame and the initial estimated position of the current frame.

5. The method according to claim 4, **characterized in that**, determining a laser radar data center point of the key frame according to the laser radar point set of the key frame and determining a laser radar data center point of the current frame according to the laser radar point set of the current frame, comprising:

determining a laser radar data center points $p_0$ in the key frame according to a formula $p_0 = \dfrac{1}{N}\sum\limits_{i=1}^{N} P_i$ ; wherein,

$p_i$ is any point in the laser radar point set of the key frame; and

determining a laser radar data center points $q_0$ in the current frame according to a formula $q_0 = \dfrac{1}{N}\sum\limits_{i=1}^{N} q_i$ ;

wherein, $q_i$ is any point in the laser radar point set of the current frame.

6. The method according to any of claims 1-3, **characterized in that**, determining a quantized value of each candidate estimated pose of the current frame according to the laser radar point set of each key frame and the laser radar point set of the current frame, comprising:

performing rotation translation transformation operation on Y laser radar point sets of the key frames to obtain Y transformed laser radar point sets;
determining a number of internal points and a number of external points in each of the transformed laser radar point sets according to each of the transformed laser radar point sets, the laser radar point set of the current frame and a first preset threshold; and
determining a quantized value of each candidate estimated pose of the current frame according to the number of internal points and the number of external points in each of the transformed laser radar point sets.

7. The method according to claim 6, **characterized in that**, determining a number of internal points and a number of external points in each of the transformed laser radar point sets according to each of the transformed laser radar point sets, the laser radar point set of the current frame and a first preset threshold, comprising:

determining a third distance corresponding to each data point in the transformed laser radar point set according to the transformed laser radar point set and the laser radar point set of the current frame; the third distance being a minimum distance between data points in the transformed laser radar point set and data points in the laser radar point set of the current frame; and
determining a number of internal points and a number of external points in each of the transformed laser radar point sets according to the third distance and the first preset threshold.

8. The method according to claim 7, **characterized in that**, determining a number of internal points and a number of external points in each of the transformed laser radar point sets according to the third distance and the first preset threshold, comprising:

if the third distance is less than the first preset threshold, determining that points in the transformed laser radar point set to be internal points;
if the third distance is greater than three times of the first preset threshold, determining that points in the transformed laser radar point set to be external points; and
determining a number of internal points and a number of external points in each of the transformed laser radar point sets according to the internal points and external points in each of the transformed laser radar point sets.

9. The method according to claim 7 or 8, **characterized in that**, determining a quantized value of each candidate estimated pose of the current frame according to the number of internal points and the number of external points in each of the transformed laser radar point sets, comprising:

according to a number of internal points and a number of external points in the *i*-th transformed laser radar point set, determining a ratio of the number of internal points to the number of external points corresponding to the *i*-th transformed laser radar point set; wherein, $1 \leq i \leq Y$;

judging whether the ratio of the number of internal points to the number of external points corresponding to the $i$-th transformed laser radar point set is less than a second preset threshold to obtain a judgment result; determining a quantized value of the transformed laser radar point set according to the judgment result; and determining a sum of quantized values of the Y transformed laser radar point sets as a quantized value of the $j$-th estimated pose of the current frame; wherein, $1 \leq j \leq Y$.

10. The method according to claim 9, **characterized in that**, determining a quantized value of the transformed laser radar point set according to the judgment result, comprising:

if the judgment result is that the ratio of the number of internal points to the number of external points corresponding to the $i$-th transformed laser radar point set is less than the second preset threshold, determining the ratio of the number of internal points to the external points corresponding to the $i$-th transformed laser radar point set as the quantized value of the transformed laser radar point set; and

if the judgment result is that the ratio of the number of internal points to the number of external points corresponding to the $i$-th transformed laser radar point set is not less than the second preset threshold, determining the second preset threshold as the quantized value of the transformed laser radar point set.

11. The method according to any of claims 1-3, **characterized in that**, correcting the gyroscope data of the mobile robot according to the candidate estimated pose corresponding to the maximum quantized value among the Y quantized values, comprising:

if the maximum quantized value is greater than a third preset threshold, correcting the gyroscope data of the mobile robot according to the candidate estimated pose information corresponding to the maximum quantized value.

12. The method according to claim 11, **characterized in that**, correcting the gyroscope data of the mobile robot according to the candidate estimated pose information corresponding to the maximum quantized value, comprising:

determining a modified estimated angle of the current frame according to a laser radar data center point of a target key frame, an initial estimated position of the target key frame, an initial estimated angle of the target key frame, the laser radar data center point of the current frame, and the initial estimated position of the current frame; the target key frame being a key frame corresponding to the maximum quantized value; and

correcting the gyroscope data of the mobile robot according to the modified estimated angle of the current frame and the candidate estimated pose information corresponding to the target key frame.

13. A mobile robot gyroscope data correction device, **characterized in that**, comprising:

a loop closure detection module, being used to perform loop closure detection of laser radar data in a current frame;

a first determination module, being used to, if the loop closure detection is successful, use an iterative closest point ICP algorithm to determine information of Y candidate estimated poses of the current frame according to initial estimated positions of Y key frames of the mobile robot, laser radar point sets of the Y key frames, initial estimated angles of the Y key frames, and a laser radar point set of the current frame of the mobile robot;

a second determination module, being used to determine a quantized value of each candidate estimated pose of the current frame according to the laser radar point set of each key frame and the laser radar point set of the current frame; and

a correction module, being used to correct the gyroscope data of the mobile robot according to the candidate estimated pose information corresponding to the maximum quantized value among the Y quantized values.

14. An apparatus, comprising a memory and a processor, the memory storing a computer program that can be run on the processor, **characterized in that**, the processor, when executing the computer program, realizing steps of a method of any of claims 1-12.

15. A computer-readable storage medium, comprising a computer program, wherein the computer program is configured to realize steps of a method of any of the claims 1-12 when the computer program is executed by the processor.

FIG. 1

S101

| performing loop closure detection of laser radar data of a current frame |

S102

| if the loop closure detection is successful, using an iterative closest point (ICP) algorithm to determine information of Y candidate estimated poses of the current frame according to initial estimated positions of Y key frames of the mobile robot, laser radar point sets of the Y key frames, initial estimated angles of the Y key frames, and a laser radar point set of the current frame of the mobile robot |

S103

| determining a quantized value of each candidate estimated pose of the current frame according to the laser radar point set of each key frame and the laser radar point set of the current frame |

S104

| correcting the gyroscope data of the mobile robot according to the candidate estimated pose information corresponding to the maximum quantized value among the Y quantized values |

FIG. 2

EP 3 786 588 A1

using the ICP algorithm to determine an initial estimated position of the current frame according to the laser radar point set of the key frame, the laser radar point set of the current frame and the initial estimated position of the key frame — S201

determining an initial estimated angle of the current frame according to the laser radar point set of the key frame, the laser radar point set of the current frame, the initial estimated position of the key frame, the initial estimated angle of the key frame and the initial estimated position of the current frame — S202

determining information of a candidate estimated pose of the current frame according to the initial estimated position of the current frame and the initial estimated angle of the current frame — S203

FIG. 3

using the ICP algorithm to determine an estimated matrix according to the laser radar point set of the key frame and the laser radar point set of the current frame; the estimated matrix including a rotation matrix and a translation matrix — S301

determining an initial estimated position of the current frame according to the estimated matrix and the initial estimated position of the key frame — S302

FIG. 4

determining a laser radar data center point of the key frame according to the laser radar point set of the key frame — S401

determining a laser radar data center point of the current frame according to the laser radar point set of the current frame — S402

determining an initial estimated angle of the current frame according to the laser radar data center point of the key frame, the laser radar data center point of the current frame, the initial estimated position of the key frame, the initial estimated angle of the key frame and the initial estimated position of the current frame — S403

FIG. 5

19

performing rotation translation transformation operation on Y laser radar point sets of the key frames respectively to obtain Y transformed laser radar point sets

S501

determining a number of internal points and a number of external points in each of the transformed laser radar point sets according to each of the transformed laser radar point sets, the laser radar point set of the current frame and a first preset threshold

S502

determining a quantized value of each candidate estimated pose of the current frame according to the number of internal points and the number of external points in each of the transformed laser radar point

S503

FIG. 6

determining a third distance corresponding to each data point in the transformed laser radar point set according to the transformed laser radar point set and the laser radar point set of the current frame; the third distance being a minimum distance between data points in the transformed laser radar point set and data points in the laser radar point set of the current frame

S601

determining a number of internal points and a number of external points in each of the transformed laser radar point sets according to the third distance and the first preset threshold

S602

FIG. 7

according to a number of internal points and a number of external points in the $i$-th transformed laser radar point set, determining a ratio of the number of internal points to the number of external points corresponding to the $i$-th transformed laser radar point set; wherein, $1 \leq i \leq Y$

S701

judging whether the ratio of the number of internal points to the number of external points corresponding to the $i$-th transformed laser radar point set is less than a second preset threshold to obtain a judgment result

S702

determining a quantized value of the transformed laser radar point set according to the judgment result

S703

determining a sum of quantized values of the Y transformed laser radar point sets as a quantized value of the $j$-th estimated pose of the current frame; wherein, $1 \leq j \leq Y$

S704

FIG. 8

determining a modified estimated angle of the current frame according to a laser radar data center point of a target key frame, an initial estimated position of the target key frame, an initial estimated angle of the target key frame, the laser radar data center point of the current frame, and the initial estimated position of the current frame; the target key frame being a key frame corresponding to the maximum quantized value

S801

correcting the gyroscope data of the mobile robot according to the modified estimated angle of the current frame and the candidate estimated pose information corresponding to the target key frame

S802

FIG. 9

Loop closure detection module 20

First determination module 21

Second determination module 22

Correction module 23

Data correction device

FIG. 10

Loop closure detection module — 20

First determination unit — 211

Second determination unit — 212

Third determination unit — 213

First determination module — 21

Second determination module — 22

Correction module — 23

Data correction device

FIG. 11

Loop closure detection module — 20

First determination unit — 211

Second determination unit — 212

Third determination unit — 213

First determination module — 21

Transformation unit — 221

Fourth determination unit — 222

Fifth determination unit — 223

Second determination module — 22

Correction module — 23

Data correction device

FIG. 12

Loop closure detection module — 20

First determination unit — 211

Second determination unit — 212

213

Third determination unit

First determination module — 21

Transformation unit — 221

222

Fourth determination unit

223

Fifth determination unit

Second determination module — 22

231

Sixth determination unit

232

First correction unit

Correction module — 23

Data correction device

FIG. 13

Processor

System bus

Operating system

Memory

Network interface

Computer program

Display screen

Non-volatile storage medium

Input device

Apparatus

FIG. 14

## INTERNATIONAL SEARCH REPORT

| International application No. |
|---|
| **PCT/CN2019/077000** |

| A. | CLASSIFICATION OF SUBJECT MATTER |
|---|---|

G01C 25/00(2006.01)i

According to International Patent Classification (IPC) or to both national classification and IPC

| B. | FIELDS SEARCHED |
|---|---|

Minimum documentation searched (classification system followed by classification symbols)

G01C(2006.01)

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS, VEN: 广东宝乐机器人股份有限公司, 王行知, 丁璜, 王立磊, 杨锴, 郑卓斌, 雷达, 激光, 回环, 闭环, 检测, 迭代最近点, 关键帧, 当前帧, 位置, 姿态, 位姿, 估计, ICP, iterative, closets, point, radar, laser, key, frame, current, gyroscope, pose, posture, estimate

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 108680185 A (GUANGDONG BONA ROBOT CORPORATION LIMITED) 19 October 2018 (2018-10-19) claims 1-14, description, paragraphs [0001]-[0220], and figures 1-14 | 1-15 |
| A | CN 106780608 A (BEIJING HORIZON ROBOTICS TECHNOLOGY RESEARCH AND DEVELOPMENT CO., LTD.) 31 May 2017 (2017-05-31) entire document | 1-15 |
| A | CN 105856230 A (JIAN, YANMEI) 17 August 2016 (2016-08-17) entire document | 1-15 |
| A | CN 107607107 A (STANDER ROBOTS (SHENZHEN) CO., LTD.) 19 January 2018 (2018-01-19) entire document | 1-15 |
| A | CN 107869989 A (NORTHEASTERN UNIVERSITY) 03 April 2018 (2018-04-03) entire document | 1-15 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 June 2019** | **14 June 2019** |

| Name and mailing address of the ISA/CN | Authorized officer |
|---|---|
| **State Intellectual Property Office of the P. R. China (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/077000**

| Patent document cited in search report | | | Publication date (day/month/year) | Patent family member(s) | | | Publication date (day/month/year) |
|---|---|---|---|---|---|---|---|
| CN | 108680185 | A | 19 October 2018 | None | | | |
| CN | 106780608 | A | 31 May 2017 | None | | | |
| CN | 105856230 | A | 17 August 2016 | CN | 105856230 | B | 24 November 2017 |
| CN | 107607107 | A | 19 January 2018 | None | | | |
| CN | 107869989 | A | 03 April 2018 | None | | | |

Form PCT/ISA/210 (patent family annex) (January 2015)